# EUROPÄISCHE PATENTSCHRIFT

(11) **EP 4 324 356 B1**
(45) Veröffentlichungstag und Bekanntmachung des Hinweises auf die Patenterteilung: **21.05.2025**
(21) Anmeldenummer: 23000114.1
(22) Anmeldetag: 14.08.2023
(51) Int. Cl.: A45C 13/10, G06F 1/16, A47B 23/04, F16M 13/02, F16M 11/20, A45C 11/00, F16M 11/10

(54) **VORRICHTUNG ZUM HALTEN UND/ODER TRANSPORTIEREN, VERWENDUNG UND VERFAHREN**
DEVICE FOR HOLDING AND/OR TRANSPORTING, USE AND METHOD
DISPOSITIF DE MAINTIEN ET/OU DE TRANSPORT, UTILISATION ET PROCÉDÉ

(30) Priorität: 16.08.2022 DE 102022002962
(43) Veröffentlichungstag der Anmeldung: 21.02.2024
(73) Patentinhaber: Tobollik, Dorian, 63533 Mainhausen (DE); Weber, Klaus, 63500 Seligenstadt (DE)
(72) Erfinder: Tobollik, Dorian, 63533 Mainhausen (DE); Weber, Klaus, 63500 Seligenstadt (DE)
(74) Vertreter: Nitz, Astrid

(56) Entgegenhaltungen:
- KR-Y1- 200 379 953
- US-A1- 2016 183 392
- US-B1- 6 425 560

## Beschreibung

Die Erfindung betrifft eine Vorrichtung zum Halten und/oder Transportieren nach dem Oberbegriff von Anspruch 1 und eine Verwendung einer Vorrichtung zum Halten und/oder Transportieren nach dem Oberbegriff von Anspruch 8 und ein Verfahren zum Betätigen einer Vorrichtung zum Halten und/oder Transportieren nach dem Oberbegriff von Anspruch 9.

Bekannt ist es, dass beispielsweise in Werkstattumgebungen von gelegentlich dort tätigen Personen, beispielsweise Außendienstmitarbeitern, mitgebrachte Notebooks oder Laptops nicht geeignet abgestellt werden können, um diese ohne Beschädigung bedienen zu können. Man versucht, diese auf den wenigen ebenen Flächen abzustellen, oder hält und betätigt diese mit einer Hand oder setzt sie auf den Knien ab. I

Dokument US6425560B1 offenbart einen Halter für magnetische Montageobjekte mit einem Magneten, einer Basis, einer schwenkbaren Montageplatte und einer abnehmbaren Befestigungsfläche.

Die Aufgabe der vorliegenden Erfindung ist es, eine sichere und zuverlässige Vorrichtung zum Halten und/oder Transportieren eines Notebooks und/oder Laptops bereitzustellen.

Die Aufgabe wird gelöst durch eine Vorrichtung nach Anspruch 1.

Durch die erfindungsgemäße Vorrichtung wird Personen das Arbeiten mit dem Notebook/Laptop in Werkstätten, auf Baustellen und ähnlichen Umgebungen wesentlich erleichtert. In Werkstätten liegen vielfältige Anbringungsmöglichkeiten vor, da die Personen in den meisten Fällen an Maschinen und Anlagen arbeiten, deren Schutzumhausungen, Türen, und Wände aus Stahlblech sind, insbesondere Schaltschrankseiten und/oder Schaltschranktüren. Die erfindungsgemäße Vorrichtung haftet durch die erfindungsgemäße Magneteinrichtung sicher und zuverlässig an beliebigen Flächen und nimmt das Notebook und/oder Laptop sicher auf. Der Bediener kann so ohne größeren Aufwand und in ergonomischer Höhe Arbeiten an der Anlage ausführen. Bei der erfindungsgemäßen Vorrichtung handelt es sich um ein Hilfsmittel beispielsweise für Monteure, Programmierer, Servicearbeiter, Elektriker, die mit einem Notebook und/oder Laptop Maschinen und Anlagen betreuen, auslesen, warten und oder programmieren. Ein Notebook und/oder Laptop, auch ein schwereres, kann darauf sicher abgestellt werden. So ist das Notebook und/oder Laptop an einem definierten Platz und nicht beispielsweise behelfsmäßig auf Kisten, Maschinen, Kartons oder auf den Knien der damit arbeitenden Personen oder anderen unsicheren und gefahranfälligen Gegenständen. Die Vorrichtung wiegt beispielhaft etwa 1,45 kg und das Notebook und/oder Laptop kann im zusammengeklappten Zustand in der Halterung verbleiben und zusammen verstaut und auch abgesichert transportiert werden.

Die erfindungsgemäße Vorrichtung kann zuverlässig an die meisten Metallflächen mit ferromagnetischen metallischen Eigenschaften, insbesondere mit Eisen, Kobalt, Nickel und entsprechende magnetische Legierungen, gehalten werden, insbesondere magnetischen Flächen, insbesondere Schaltschrankseiten und/oder Schaltschranktüren. Die Vorrichtung wird zum Beispiel an einen Schaltschrank angeheftet und das Notebook und/oder Laptop kann darauf abgestellt werden. Die Magnetelemente sind beispielhaft vorteilhaft mit einem Gummischutzmantel versehen, um Kratzer an der beaufschlagten metallischen Trageoberfläche zu vermeiden und die Rutschfestigkeit zu verbessern. Die Halterung lässt sich mit geringer Kraft von der Haftfläche lösen, ermöglich aber ein sicheres und standfestes Bedienen des Notebooks und/oder Laptops. Die erste Halteeinrichtung und die zweite Halteeinrichtung können vorteilhaft aus Aluminium, Edelstahl oder Stahl o. ä. hergestellt werden.

Vorteilhaft ist es, wenn die zweite Halteeinrichtung mehrere Magnetelemente aufweist, die über die zweite Halteeinrichtung verteilt angeordnet sind, insbesondere über eine Rückseite der zweiten Halteeinrichtung verteilt, insbesondere weiterhin Rutschhemmungselemente, insbesondere angeordnet auf den Magnetelementen.

Die zweite Halteeinrichtung weist drei Magnetelemente auf, wobei ein erstes Magnetelement und ein zweites Magnetelement in einer oberen Bereich der Halteeinrichtung und ein drittes Magnetelement im Wesentlichen mittig in einem unteren Bereich der zweiten Halteeinrichtung angeordnet sind.

Vorteilhaft ist es, wenn die Magnethalterung eine Haltekraft von etwa 225 N, insbesondere etwa mit drei Magnetelementen zu jeweils etwa 75 N aufweist und/oder die Magnethalterung insbesondere Neodym-Legierungsmagnete aufweist, insbesondere daraus besteht. Beispielhaft kann ein Notebook und/oder Laptop in der Größe von etwa 375 x 285 x 29 mm aufgenommen werden, jedoch auch Ausführungen in anderen Größen. Auch der Öffnungswinkel kann durch verschiedene Längen der Halteseile verändert werden. Die Außenmaße der Vorrichtung im zusammengeklappten Zustand sind beispielhaft 408 x 296 x 43,5 mm. An der Vorrichtung sind vorteilhaft 3 Magneten mit einer Haltekraft von jeweils beispielhaft 75 N angebracht, also in Summe 225 N, angebracht, ca. 23 kg Haltegewicht. Vorteilhaft ist der Einsatz starker Neodym-Legierungsmagnete vorgesehen.

Vorteilhaft ist es, wenn an der ersten Halteeinrichtung und korrespondierend an der zweiten Halteeinrichtung zumindest an einer Schmalseite, insbesondere an zwei Schmalseiten jeweils ein Klapphalteelement zur Halterung der Klappverbindung in einer Aufklappposition vorgesehen ist, insbesondere zumindest an einer Schmalseite jeweils ein Halteseil, das an Seilhalterungen befestigt ist, vorgesehen ist, insbesondere ein Stahlsein.

Vorteilhaft ist es, wenn die erste Halteeinrichtung eine Längsseite von etwa 370 - 400 mm, insbesondere etwa 375 mm, aufweist und eine Schmalseite von etwa 270 - 300 mm, insbesondere etwa 285 aufweist an einer Längsseite ein Sicherungselement zur Halterung des Notebooks aufweist.

Vorteilhaft ist es, wenn die erste Halteeinrichtung und die zweite Halteeinrichtung korrespondierend abgestimmte Längsseiten und Schmalseiten aufweist, so dass eine Zusammenklappposition haltbar ist, insbesondere hochklappbar in einer Befestigungsposition, und/oder ist die die erste Halteeinrichtung und die zweite Halteeinrichtung aufgebaut aus Aluminium und/oder Edelstahl und/oder/oder Stahl. Vorteilhaft ist es, wenn als Klappverbindung Schraubelemente zwischen an der ersten Halteeinrichtung und korrespondierend an der zweiten Halteeinrichtung vorgesehen sind.

Die Aufgabe wird gelöst durch eine Verwendung einer Vorrichtung nach einem der Ansprüche 1 bis 7.

Die Aufgabe wird gelöst durch ein Verfahren zur Verwendung einer Vorrichtung nach einem der Ansprüche 1 bis 7, wobei die zweite Halteeinrichtung mittels einer Magnethalterung an einer insbesondere senkrechten Metallfläche angebracht wird, wobei die erste Halteinrichtung über eine Klappverbindung mit der zweiten Halteeinrichtung klappbar verbunden ist, und in die erste Halteeinrichtung das Notebook eingesetzt wird, insbesondere mit einer oder mehrere Aufnahmesicherungen, eine zweite Halteeinrichtung, wobei die Anbringung die zweite Halteeinrichtung durch Lösen der Magnethalterung abnehmbar ist.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine schematische Darstellung der erfindungsgemäßen Vorrichtung in einer Aufklappposition,
- Fig. 2: eine schematische Darstellung der erfindungsgemäßen Vorrichtung und
- Fig. 3: ein schematische Darstellung der erfindungsgemäßen Vorrichtung in einer Zusammenklappposition.

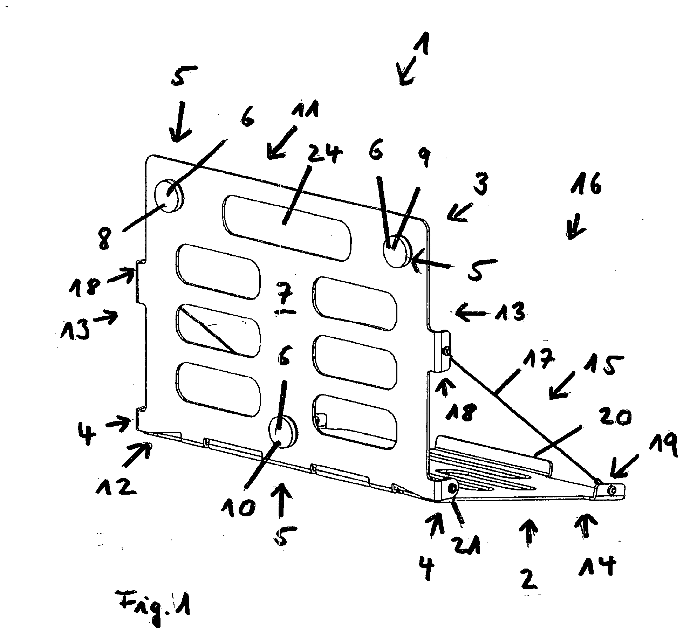

Fig. 1 zeigt eine schematische Darstellung der erfindungsgemäßen Vorrichtung 1 zum Halten und/oder Transportieren eines nicht dargestellten Notebooks und/oder Laptops in einer Rückansicht in einer Aufklappposition 16, umfassend eine erste Halteeinrichtung 2 zur Aufnahme des Notebooks, insbesondere mit einer oder mehrere Aufnahmesicherungen 20, eine zweite Halteeinrichtung 3, wobei die erste Halteinrichtung 2 über eine Klappverbindung 4 mit der zweiten Halteeinrichtung 3 klappbar verbunden ist, wobei die zweite Halteeinrichtung 3 eine Magnethalterung 5 zur lösbaren Anbringung der zweiten Halteeinrichtung 3 an einer insbesondere senkrechten Metallfläche aufweist, wobei die zweite Halteeinrichtung mehrere Magnetelemente 6 aufweist, die über die zweite Halteeinrichtung verteilt angeordnet sind, insbesondere über eine Rückseite 7 der zweiten Halteeinrichtung 3 verteilt, insbesondere weiterhin Rutschhemmungselemente, insbesondere angeordnet auf den Magnetelementen 6, wobei die zweite Halteeinrichtung 3 drei Magnetelemente 6 aufweist, wobei ein erstes Magnetelement 8 und ein zweites Magnetelement 9 in einer oberen Bereich 11 der Halteeinrichtung und ein drittes Magnetelement 10 im Wesentlichen mittig in einem unteren Bereich 12 der zweiten Halteeinrichtung 3 angeordnet sind.

Beispielhaft weist die Magnethalterung 5 eine Haltekraft von etwa 225 N auf, insbesondere etwa mit drei Magnetelementen 6 zu jeweils etwa 75 N aufweist und/oder die Magnethalterung 5 Neodym-Legierungsmagnete aufweist, insbesondere daraus besteht. Beispielhaft weist die erste Halteeinrichtung und die zweite Halteeinrichtung korrespondierend abgestimmte Längsseiten 18 und Schmalseiten 13, 14 auf, so dass ein Zusammenklappposition 22 haltbar ist, auch an der Schranktür, insbesondere ist die Vorrichtung mittels einer Tragausnehmung 24 tragbar, insbesondere hochklappbar in einer Befestigungsposition, und/oder ist die die erste Halteeinrichtung und die zweite Halteeinrichtung aufgebaut aus Aluminium und/oder Edelstahl und/oder/oder Stahl, wobei an der ersten Halteeinrichtung 2 und korrespondierend an der zweiten Halteeinrichtung 3 zumindest an einer Schmalseite 13, 14, insbesondere an zwei Schmalseiten 13, 14 jeweils ein Klapphalteelement 15 zur Halterung der Klappverbindung 4 in einer Aufklappposition 16 vorgesehen ist, insbesondere zumindest an einer Schmalseite 13, 14 jeweils ein Halteseil 17, das an Seilhalterungen 18, 19 befestigt ist, vorgesehen ist.

Beispielhaft hat die erste Halteeinrichtung eine Längsseite 18 von etwa 370 - 400 mm, insbesondere etwa 375 mm, und eine Schmalseite 13, 14 von etwa 270 - 300 mm, insbesondere etwa 285 aufweist an einer Längsseite ein Sicherungselement zur Halterung des Notebooks aufweist.

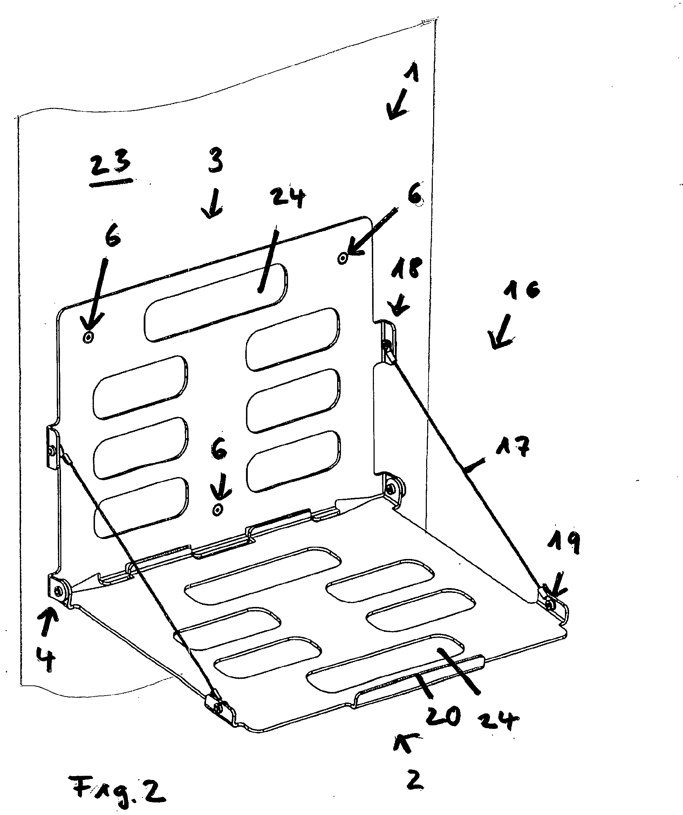

Fig. 2 zeigt eine schematische Darstellung der erfindungsgemäßen Vorrichtung 1 in einer Vorderansicht in einer Aufklappposition 16, beispielhaft angesetzt an eine Metallwand 23, insbesondere eine metallische Schaltschranktür - und/oder -wand, gehalten durch beispielhafte Magnetelemente 6, beispielhaft drei. Vorteilhaft weist die Vorrichtung 1 eine beispielhafte Tragausnehmung 24 auf, die ein sicheres Tragen ermöglicht. Die erste Haltereinrichtung 2 und die zweite Halteeinrichtung 3 sind beispielhaft durch ein stabiles Halteseil 17 verbunden, insbesondere ein Stahlseil.

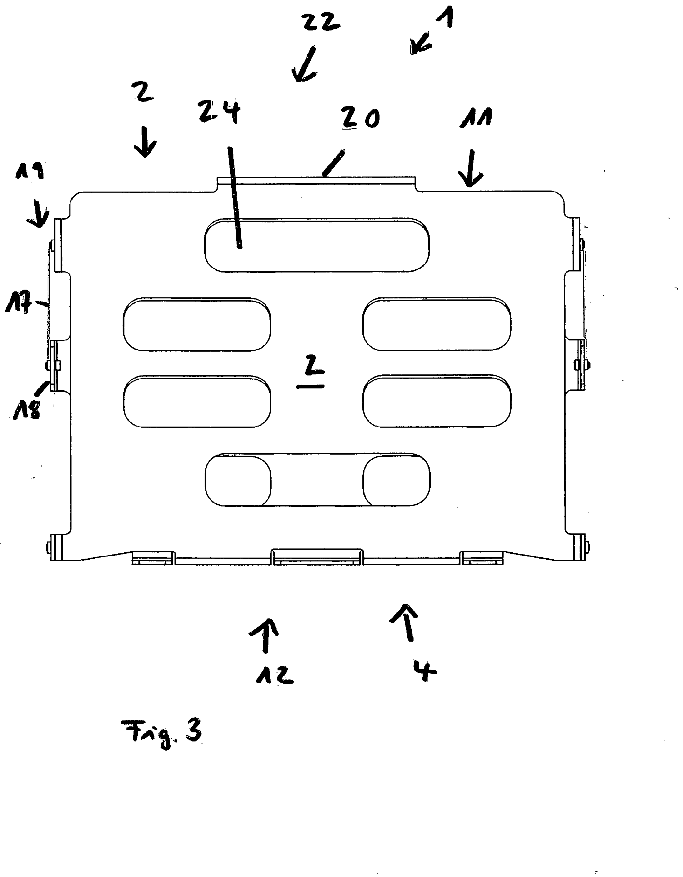

Fig. 3 zeigt ein schematische Darstellung der erfindungsgemäßen Vorrichtung 1 in einer Zusammenklappposition 22. Die Vorrichtung 1 kann beispielhaft einschließlich eines Notebooks und/oder Laptops in der Zusammenklappposition 22 an einer nicht dargestellten Metallwand mit Hilfe einer erfindungsgemäßen Magnethalterung, insbesondere der Magnetelemente, gehalten werden oder auch getragen werden.

### BEZUGSZEICHENLISTE

1 Vorrichtung zum Halten und/oder Transportieren
2 erste Halteinrichtung
3 zweite Halteeinrichtung
4 Klappverbindung
5 Magnethalterung
6 Magnetelement
7 Rückseite
8 erstes Magnetelement
9 zweites Magnetelement
10 drittes Magnetelement
11 oberen Bereich
12 unteren Bereich
13 Schmalseite
14 Schmalseite
15 Klapphalteelement
16 Aufklappposition
17 Halteseil
18 Seilhalterung
19 Seilhalterung
20 Aufnahmesicherung
21 Schraubelement
22 Zusammenklappposition
23 Metallwand
24 Tragausnehmung

## Patentansprüche

1. Vorrichtung (1) zum Halten und/oder Transportieren eines Notebooks und/oder Laptops,
umfassend
eine erste Halteeinrichtung (2) zur Aufnahme des Notebooks und/oder Laptops, insbesondere mit einer oder mehrerer Aufnahmesicherungen (20),
eine zweite Halteeinrichtung (3),
wobei die erste Halteinrichtung (2) über eine Klappverbindung (4) mit der zweiten Halteeinrichtung (3) klappbar verbunden ist,
wobei die zweite Halteeinrichtung (3) eine Magnethalterung (5) zur lösbaren Anbringung der zweiten Halteeinrichtung (3) an einer insbesondere senkrechten Metallfläche aufweist, **dadurch gekennzeichnet, dass** die zweite Halteeinrichtung (3) drei Magnetelemente (6) aufweist, wobei ein erstes Magnetelement (8) und ein zweites Magnetelement (9) in einer oberen Bereich (11) der Halteeinrichtung und ein drittes Magnetelement (10) im Wesentlichen mittig in einem unteren Bereich (12) der zweiten Halteeinrichtung (3) angeordnet sind.

2. Vorrichtung nach Anspruch 1, **dadurch gekennzeichnet, dass** die zweite Halteeinrichtung mehrere Magnetelemente (6) aufweist, die über die zweite Halteeinrichtung verteilt angeordnet sind, insbesondere über eine Rückseite (7) der zweiten Halteeinrichtung (3) verteilt, insbesondere weiterhin Rutschhemmungselemente, insbesondere angeordnet auf den Magnetelementen (6).

3. Vorrichtung nach einem der Ansprüche 1 bis 2, **dadurch gekennzeichnet, dass** die Magnethalterung (5) eine Haltekraft von etwa 225 N, insbesondere etwa mit drei Magnetelementen (6) zu jeweils etwa 75 N aufweist und/oder die Magnethalterung (5) insbesondere Neodym-Legierungsmagnete aufweist, insbesondere daraus besteht.

4. Vorrichtung nach einem der Ansprüche 1 bis 3, **dadurch gekennzeichnet, dass** an der ersten Halteeinrichtung (2) und korrespondierend an der zweiten Halteeinrichtung (3) zumindest an einer Schmalseite (13, 14), insbesondere an zwei Schmalseiten (13, 14) jeweils ein Klapphalteelement (15) zur Halterung der Klappverbindung (4) in einer Aufklappposition (16) vorgesehen ist, insbesondere zumindest an einer Schmalseite (13, 14) jeweils ein Halteseil (17), das an Seilhalterungen (18, 19) befestigt ist, vorgesehen ist, insbesondere Stahlseile.

5. Vorrichtung nach einem der Ansprüche 1 bis 4, **dadurch gekennzeichnet, dass** die erste Halteeinrichtung eine Längsseite (18) von etwa 370 - 400 mm, insbesondere etwa 375 mm, aufweist und eine Schmalseite (13, 14) von etwa 270 - 300 mm, insbesondere etwa 285 aufweist an einer Längsseite ein Sicherungselement zur Halterung des Notebooks aufweist.

6. Vorrichtung nach einem der Ansprüche 1 bis 5, **dadurch gekennzeichnet, dass** die erste Halteeinrichtung und die zweite Halteeinrichtung korrespondierend abgestimmte Längsseiten (18) und Schmalseiten (13, 14) aufweist, so dass ein Zusammenklappposition (22) haltbar ist, insbesondere mittels einer Tragausnehmung (24) tragbar, insbesondere hochklappbar in einer Befestigungsposition, und/oder ist die die erste Halteeinrichtung und die zweite Halteeinrichtung aufgebaut aus Aluminium und/oder Edelstahl und/oder/oder Stahl.

7. Vorrichtung nach einem der Ansprüche 1 bis 6, **dadurch gekennzeichnet, dass** als Klappverbindung (4) Schraubelemente (21) zwischen an der ersten Halteeinrichtung (2) und korrespondierend an der zweiten Halteeinrichtung (3) vorgesehen sind.

8. Verwendung einer Vorrichtung (1) nach einem der Ansprüche 1 bis 7, zur Halterung und/oder Transport für tragbare Computereinrichtungen, insbesondere Notebooks und/oder Laptops.

9. Verfahren zur Verwendung einer Vorrichtung nach einem der Ansprüche 1-7,
wobei die zweite Halteeinrichtung (3) mittels einer Magnethalterung (5) an einer insbesondere senkrechten Metallfläche angebracht wird, wobei die erste Halteinrichtung (2) über eine Klappverbindung (4) mit der zweiten Halteeinrichtung (3) klappbar verbunden ist,
und in die erste Halteeinrichtung (2) das Notebook und/oder Laptop eingesetzt wird, insbesondere mit einer oder mehrere Aufnahmesicherungen (20),
eine zweite Halteeinrichtung (3), wobei die Anbringung die zweite Halteeinrichtung (3) durch Lösen der Magnethalterung (5) abnehmbar ist.

## Claims

1. Device (1) for holding and/or transporting a notebook and/or laptop, comprising a first holding device (2) for holding the notebook and/and laptop, in particular with one or more receiving reception lock devices (20), a second holding device (3), wherein the first holding device (2) is connected in a foldable manner to the second holding device (3) via a folding connection (4), wherein the second holding device [3] comprises three magnetic elements (6), wherein a first magnetic element (8) and a second magnetic element (9) are arranged in an upper region (11) of the holding device and a third magnetic element (10) are arranged substantially centrally in a lower region (12) of the second holding device (3).

2. Device according to claim 1, wherein the second holding device comprises a plurality of magnetic elements (6) which are distributed over the second holding device, in particular distributed over a rear side (7) of the second holding device (3), in particular further anti-slip elements, in particular arranged on the magnet elements (6).

3. Device according to one of the claims 1 to 2, wherein the magnet holder (5) has a holding force of about 225 N, in particular with about three magnet elements (6) of about 75 N each, and/or the magnet holder (5) has, in particular, neodymium alloy magnets, especially is made of them.

4. Device according to one of the claims 1 to 3, **characterized in that** on the first holding device (2) and corresponding on the second holding device (3), at least on a narrow side (13, 14), in particular on two narrow sides (13, 14), respectivly a folding retaining element (15) is provided for holding the folding connection (4) in an opened position (16) in each case a retaining cable (17) is provided on at least one narrow side (13, 14), which is fastened to rope holders (18, 19), in particular steel cables, is provided.

5. Device according to one of the claims 1 to 4, wherein the first holding device has a longitudinal side (18) of about 370-400 mm, in particular about 375 mm, and a narrow side (13, 14) of about 270-300 mm, in particular about 285, on a longitudinal side a securing element for holding the notebook.

6. Device according to one of the claims 1 to 5, wherein the first holding device and the second holding device have correspondingly matched longitudinal sides (18) and narrow sides (13, 14) so that a collapsible position (22) is capable, in particular can be carried by means of a carrying recess (24), in particular can be folded up in a fastening position, and/or the first holding device and the second holding device are constructed of aluminum and/or stainless steel and/or/or steel.

7. Device according to one of the claims 1 to 6, wherein screw elements (21) are provided as a folding connection (4) between the first holding device (2) and corresponding to the second holding device (3).

8. Use of a device according to one of the claims 1 to 7, for holding and/or transporting portable computer devices, in particular notebooks and/or laptops.

9. Method for using a device according to one of the claims 1 to 7, wherein the second holding device (3) is attached to a metal surface that is particularly vertical by means of a magnetic holder (5), wherein the first holding device (2) is connected in a foldable manner to the second holding device (3) via a folding connection (4), wherein the notebook and/or laptop are inserted in the first holding device (2), in particular with one or more reception lock devices (20), a second holding device (3) wherein the attachment of the second holding device (3) is removable by releasing the magnetic holder (5).

## Revendications

1. Dispositif (1) de maintien et/ou de transport d'un ordinateur portable et/ou d'un ordinateur portable, comprenant un premier dispositif de maintien (2) pour accueillir l'ordinateur portable et/ou, en particulier, avec une ou plusieurs protections d'accueil (20), un second dispositif de maintien (3), dans lequel le premier dispositif de maintien (3) est relié de manière rabattable au second dispositif de maintien (3) par l'intermédiaire d'une liaison rabattable (4), dans lequel le deuxième dispositif de maintien (3) comporte un support magnétique (5) pour fixer le second dispositif de maintien détachable sur une surface métallique particulièrement verticale, **caractérisé en ce que** le deuxième dispositif de soutien (3) comporte trois éléments magnétiques (6), dans lequel un premier élément magnétique (8) et un deuxième élément magnétique (9) sont disposés dans une zone supérieure (11) du dispositif de maintien et un troisième élément magnétique (10) essentiellement au centre d'une zone inférieure (12) du deuxième dispositif de maintien (3).

2. Dispositif selon la revendication 1, **caractérisé en ce que** le second dispositif de maintien comporte plusieurs éléments magnétiques (6) répartis sur le second dispositif de maintien, en particulier répartis sur un dos (7) du second dispositif de maintien (3), en particulier des éléments antidérapants, en particulier agencés sur les éléments magnétiques (6).

3. Dispositif selon l'une quelconque des revendications 1 à 2, **caractérisé en ce que** le support magnétique (5) présente une force de maintien d'environ 225 N, en particulier avec environ trois éléments magnétiques (6) chacun d'environ 75 N et/ou le support magnétique (5) comprend notamment des aimants en alliage de néodyme, en particulier ceux-ci.

4. Dispositif selon l'une quelconque des revendications 1 à 3, **caractérisé en ce que** le premier dispositif de maintien (2) et le second dispositif de maintien (3) comportent au moins un côté étroit (13, 14), en particulier deux côtés étroits (13, 14) chacun, un élément de maintien rabattable (15) pour le support de la liaison rabattable (4) dans une position de repliement (16), en particulier au moins un côté étroite (13, 14) à chaque fois un câble de maintien (17) fixé sur des supports de câble (18, 19), notamment des câbles en acier.

5. Dispositif selon l'une quelconque des revendications 1 à 4, **caractérisé en ce que** le premier dispositif de maintien a un côté longitudinal (18) d'environ 370 - 400 mm, en particulier environ 375 mm, et un côté étroit (13, 14) d'environ 270 - 300 mm, en particulier d'environ 285, comporte sur un côté longitatif un élément de sécurité pour le support de l'ordinateur portable.

6. Dispositif selon l'une quelconque des revendications 1 à 5, **caractérisé en ce que** le premier dispositif de maintien et le second dispositif de maintien ont des côtés longitudinaux (18) et des côtés étroits (13, 14) assortis de manière à ce qu'une position de pliage (22) puisse être maintenue, notamment au moyen d'une évidement de support (24), notamment rabattable dans une position de fixation, et/ou que le premier dispositif et le deuxième dispositif de maintien soient construits en aluminium et/ou en acier inoxydable et/ou en acier.

7. Dispositif selon l'une quelconque des revendications 1 à 6, **caractérisé en ce qu'**en tant que liaison rabattable (4) des éléments de vis (21) sont prévus entre le premier dispositif de maintien (2) et le second dispositif de maintien (3).

8. Utilisation d'un dispositif (1) selon l'une quelconque des revendications 1 à 7, pour le support et/ou le transport de dispositifs informatiques portables, en particulier d'ordinateurs portables et/ou d'ordinateurs portables.

9. Procédé d'utilisation d'un dispositif selon l'une quelconque des revendications 1 à 7, dans lequel le second dispositif de maintien (3) est fixé au moyen d'un support magnétique (5) sur une surface métallique particulièrement verticale, dans lequel le premier dispositif de maintien (2) est relié de manière rabattable au second dispositif de maintien (3), et dans le premier dispositif de soutien (2) est inséré l'ordinateur portable et/ou l'ordinateur portable, en particulier avec une ou plusieurs protections d'accueil (20), un deuxième dispositif de maintien (3).
